(19) Europäisches Patentamt
European Patent Office
Office européen des brevets

(11) Veröffentlichungsnummer: **0 010 675**
**B1**

# (12) EUROPÄISCHE PATENTSCHRIFT

(45) Veröffentlichungstag der Patentschrift: **23.02.83**

(51) Int. Cl.³: **C 07 C 118/00,** C 08 G 18/76, C 08 J 5/18, C 08 L 75/04

(21) Anmeldenummer: **79103967.0**

(22) Anmeldetag: **15.10.79**

## (54) Verfahren zur Aufarbeitung von Toluylendiisocyanat-Destillationsrückständen und Verwendung der Verfahrensprodukte als Pressmassen oder als reaktive Füllstoffe, insbesondere bei der Herstellung von Platten und Formteilen.

(30) Priorität: **27.10.78 DE 2846815**

(43) Veröffentlichungstag der Anmeldung: **14.05.80 Patentblatt 80/10**

(45) Bekanntmachung des Hinweises auf die Patenterteilung: **23.02.83 Patentblatt 83/8**

(84) Benannte Vertragsstaaten: **BE DE FR GB IT**

(56) Entgegenhaltungen: **US-A-3 180 852**

(73) Patentinhaber: **BAYER AG, Zentralbereich Patente, Marken und Lizenzen, D-5090 Leverkusen 1, Bayerwerk (DE)**

(72) Erfinder: **Reischl, Artur, Dr., H.T.-von-Böttinger-Strasse 19, D-5090 Leverkusen 1 (DE)**
Erfinder: **Wagner, Kuno, Dr., Am Kiesberg 8, D-5090 Leverkusen 1 (DE)**

EP 0 010 675 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Aufarbeitung von Toluylendiisocyanat-Destillationsrückständen und Verwendung der Verfahrensprodukte als Pressmassen oder als reaktive Füllstoffe, insbesondere bei der Herstellung von Platten und Formteilen

Die Erfindung betrifft ein Verfahren zur Aufarbeitung des Destillationsrückstands, wie er bei der grosstechnischen Herstellung von Toluylendiisocyanat anfällt, durch Vermahlen und gegebenenfalls gleichzeitige und/oder anschliessende chemische Modifizierungsreaktionen. Das dabei erhaltene feinteilige Pulver kann als Press- bzw. Sintermasse oder als reaktiver Füllstoff bei der Herstellung der verschiedensten Kunststoffe, sowie als Bindemittel beim Heissverpressen lignocellulosehaltiger Rohstoffe eingesetzt werden.

Bei der grosstechnischen Produktion von Isocyanaten entstehen zwangsläufig immer erhebliche Mengen an höhermolekularen, vernetzten Neben- und Folgeprodukten. Diese Nebenprodukte fallen während der destillativen Aufarbeitung der durch Phosgenierung von Aminen erhaltenen rohen Isocyanatlösungen als teerartiger, nichtdestillierbarer Rückstand an. Solche Rückstände sind für die üblichen Einsatzzwecke von Polyisocyanaten (Herstellung von Polyurethankunststoffen) im allgemeinen ungeeignet. Um einen totalen Verlust des nichtdestillierbaren Rückstands zu vermeiden, kann man sich in manchen Fällen, beispielsweise bei der Phosgenierung von Diaminen der Diphenylmethanreihe, so behelfen, dass man nur einen Teil des reinen, monomeren Isocyanats aus dem rohen Phosgenierungsprodukt isoliert, d.h. einen beträchtlichen Anteil an monomerem Isocyanat in der Sumpfphase belässt, um die höhermolekularen Nebenprodukte in Lösung zu halten. Für das so erhaltene, flüssige, an höhermolekularen Produkten angereicherte Polyisocyanatgemisch (sogenanntes "rohes MDI") konnte im Laufe der letzten Jahre eine Reihe von Anwendungsmöglichkeiten für spezielle Kunststoffe gefunden werden.

Bisher scheiterten jedoch alle Versuche, in analoger Weise an höhermolekularen Folgeprodukten angereichertes Toluylendiisocyanat ("rohes TDI") mit einem ökonomisch noch vertretbar niedrigen Anteil an monomerem Toluylendiisocyanat anzuwenden: Unter den technisch realisierbaren Bedingungen fallen bei der Destillation des Phosgenierungsprodukts von Toluylendiaminen immer höhermolekulare, unlösliche Folgeprodukte mit Uretdion-, Isocyanurat-, Carbodiimid-, Uretonimin-, Harnstoff- und Biuretgruppen an. Je nach Gehalt des Ausgangsprodukts an o-Toluylendiamin entstehen bei der Phosgenierung ausserdem Methylbenzimidazolone, die im Laufe der Zeit mit den vorhandenen freien Isocyanatgruppen unter Molekülvergrösserung zu unlöslichen, vernetzten Produkten biuretisiert werden. Rohe TDI-Destillationsrückstände, die noch einen hohen Monomerengehalt (möglichst über 80 Gew.-%) aufweisen und praktisch kein Methylbenzimidazolon oder dessen Derivate enthalten, sind zwar löslich aber nicht ausreichend lagerstabil; der Gehalt an freien NCO-Gruppen nimmt auch bei Raumtemperatur während der Lagerung unter Viskositätserhöhung des Gemisches laufend ab.

In US-PS 3 634 361, DE-OS 2 123 183, DE-OS 2 333 150, US-PS 3 634 361 und DE-OS 2 423 594 werden verschiedene Verfahren beschrieben, wonach TDI-Destillationsrückstände, die noch einen beträchtlichen Gehalt an freien NCO-Gruppen (bevorzugt über 20 Gew.-%) aufweisen, in Anwesenheit von monomeren Diisocyanaten in einem organischen Lösungsmittel, gegebenenfalls unter Anwendung hoher Temperaturen, gelöst werden. Diese Rückstandslösungen können dann als Isocyanatkomponente für das Polyisocyanat-Polyadditionsverfahren eingesetzt werden. In der Praxis scheiterte eine solche Verwertung der TDI-Rückstände jedoch an der mangelnden Lagerstabilität und Standardisierbarkeit der Lösungen (falls eine Auflösung überhaupt möglich war) oder an der Sedimentation unlöslicher Bestandteile während der Lagerung.

Ein partielles Recycling gelang in letzter Zeit durch alkalische Hydrolyse der TDI-Destillationsrückstände. Es wird dabei allerdings nur ein relativ kleiner Anteil an Toluylendiaminen rückgewonnen.

Mehr Erfolg, die Ausbeute an 2,4-TDI ("T 100") bzw. an Isomerengemischen aus 80% 2,4-TDI und 20% 2,6-TDI ("T 80") oder 65% 2,4-TDI und 35% 2,6-TDI ("T 65"), jeweils bezogen auf eingesetztes Toluylendiamin, zu maximieren, brachten die mittlerweile in grossem Umfang bei der technischen Produktion von Toluylendiisocyanat angewandten sogenannten Fallrohrverdampfer (DE-OS 2 035 731) bzw. die kontinuierliche Thermolyse des noch flüssigen TDI-Rückstandsteers. Dabei fallen nur noch etwa 10% (bezogen auf rohes TDI) eines praktisch monomerenfreien, jedoch noch freie Isocyanatgruppen enthaltenden Rückstands an, der zwecks Vermeidung von leicht auftretenden Schwelbränden und auch aus physiologischen Gründen unmittelbar im Anschluss an die Abtrennung des reinen, monomeren TDI als teerartige Masse mit einer Temperatur von ca. 150 bis 300°C mit Wasser abgeschreckt wird. Bei diesem Denaturierungsprozess reagieren die noch vorhandenen freien Isocyanatgruppen zu einem erheblichen Teil mit dem Wasser unter Kohlendioxidentwicklung und Ausbildung von zusätzlichen Harnstoffgruppierungen, so dass nur noch ein geringer Rest (meist ca. 1 bis 10 Gew.-%) an inkludierten Isocyanatgruppen übrig bleibt. Beim Lagern in Wasser oder in feuchtem Zustand nimmt der Isocyanatgehalt im Verlauf längerer Zeiträume allmählich weiter ab.

Die so erhaltenen, schlackenartigen, Polyharnstoff- und Isocyanuratgruppen aufweisenden TDI-Rückstände sind in allen gebräuchlichen Lösungsmitteln unlöslich. Oberhalb von 250 ± 30°C beginnen sie teilweise zu schmelzen, wobei Zersetzung und Gasentwicklung auftritt. Eine technisch und ökonomisch interessante Verwertungsmöglichkeit für diese Rückstandsschlacke,

insbesondere der extrem hochtemperaturbeständigen, unschmelzbaren T 80-Rückstandsschlacke, wie sie in der weitaus überwiegenden Menge bei der TDI-Produktion anfällt, wurde bisher noch nicht gefunden.

Der grösste Teil der in riesigen Mengen weltweit zwangsweise anfallenden TDI-Destillationsrückstände (mehr als 10 Gewichtsprozent der gesamten TDI-Produktion) wird daher auf Deponien abgelagert oder mit erheblichen Problemen in Heizwerken verbrannt. Bei der Verbrennung der TDI-Rückstandsschlacken bilden sich am Boden des Verbrennungsraums Ablagerungen von fest haftenden, schwer entflammbaren Teermassen, die sich in vielen Fällen oberhalb von ca. 500 °C explosionsartig zersetzen.

Es war deshalb Aufgabe der vorliegenden Erfindung, für die TDI-Destillationsrückstände, insbesondere für die mit Hilfe von Wasser denaturierten TDI-Rückstandsschlacken, technisch brauchbare Verwertungsmöglichkeiten im Sinne eines Recycling aufzuzeigen.

In der US-PS 3 180 852 wird die Verwendung von Isocyanat-Destillationsrückständen, welche etwa 20–60 Gew.-% NCO enthalten, zur Herstellung von Kunststoffen beschrieben. Man setzt diese, gegebenenfalls gemahlenen Rückstände mit Verbindungen mit wenigstens zwei-aktiv-H enthaltenen Gruppen bei Temperaturen von 150–300 °C zu Kunststoffen um. Solche Destillationsrückstände mit hohen NCO-Gehalten sind teilweise noch löslich oder erweichend und lassen sich so noch verhältnismässig leicht zu Polymermassen umsetzen. Destillationsrückstände mit solch relativ hohen NCO-Gehalten lassen sich wegen ihrer thermoplastischen Charakteristik aber nur schwer mahlen, insbesondere ist ihre Feinstmahlung sehr erschwert.

Überraschenderweise wurde nunmehr gefunden, dass sich die TDI-Destillationsrückstände durch sehr feines Vermahlen und gegebenenfalls gleichzeitig durchführbare oder anschliessende einfache chemische Modifizierungsreaktionen in heterodisperser Phase in hochwertige, reaktive Füllstoffe überführen lassen, welche bei der Herstellung der verschiedenartigsten Kunststoffe durch Polyaddition, Polykondensation oder Polymerisation mitverwendet werden können.

Gegenstand der Erfindung ist somit ein Verfahren zur Aufarbeitung von Toluylendiisocyanat-Destillationsrückständen unter Vermahlung der Rückstandsschlacke und gegebenenfalls Umsetzung mit reaktiven Verbindungen unter Gewinnung wiederverwertbarer Ausgangsprodukte für die Herstellung von Kunststoffen dadurch gekennzeichnet, dass man einen im wesentlichen monomerenfreien, vernetzten, in inerten organischen Lösungsmitteln unlöslichen, nicht unzersetzt schmelzbaren Destillationsrückstand, wie er bei der destillativen Entfernung von monomeren Toluylendiisocyanaten aus dem rohen Phosgenierungsprodukt von Toluylendiaminen, gegebenenfalls nach dem Einrühren in Wasser, als Schlacke mit einem NCO-Gehalt < 15 Gew.-% anfällt, zu einer mittleren Teilchengrösse von weniger als 800 µm, bevorzugt weniger als 350 µm, insbesondere weniger als 100 µm besonders bevorzugt weniger als 10 µm, vermahlt und gegebenenfalls gleichzeitig und/oder anschliessend durch Reaktion mit gegenüber den funktionellen Gruppen des Destillationsrückstands reaktiven Verbindungen chemisch modifiziert.

Die im erfindungsgemässen Verfahren einzusetzenden Destillationsrückstände fallen, wie oben bei der Darlegung der der vorliegenden Erfindung zugrundeliegenden Problemstellung eingehend beschrieben wurde, zwangsweise bei den heute gängigen Produktionsverfahren von 2,4- und/oder 2,6-Toluylendiisocyanat in grosstechnischem Massstab an. Es handelt sich dabei um höhermolekulare, über Hauptvalenzbindungen vernetzte Rückstandsschlacken, die meistens in einer Menge von über 10 Gew.-%, bezogen auf die berechnete quantitative Ausbeute an monomeren Diisocyanaten, entstehen und die zwecks besserer Handhabbarkeit meist über 150 °C heiss in Wasser eingetragen werden, wobei unter Reaktion eines grossen Teils der freien Isocyanatgruppen zu Polyharnstoffgruppen eine grobteilige, unregelmässig geformte, unlösliche Schlacke entsteht. Diese Schlacke hat zwar noch einen geringen Gehalt an freien NCO-Gruppen (im allgemeinen unter 15 Gew.-%, meist 1 bis 10 Gew.-%), jedoch ist sie praktisch frei an monomeren Diisocyanaten. Neben den NCO-Gruppen weisen die TDI-Rückstandsschlacken in unterschiedlichen Mengenverhältnissen Harnstoff-, Biuret-, Uretdion-, Isocyanurat-, Carbodiimid-, Uretonimin- und gegebenenfalls auch Methylbenzimidazolongruppen sowie deren Biuretisierungsprodukte auf. Die Schlacken sind über diese verschiedenen funktionellen Gruppen so hoch vernetzt, dass sie selbst bei einer mittleren Teilchengrösse von weniger als 5 µm in inerten organischen Lösungsmitteln wie Methylenchlorid, Cyclohexan, Cyclohexanon, Toluol, Xylol oder Dichlorbenzol auch bei Siedetemperatur praktisch unlöslich sind. In siedendem Dimethylformamid werden die Rückstandspulver teilweise angequollen, lösen sich jedoch nicht. Beim Erhitzen erweicht, wenn überhaupt, nur ein sehr geringer Anteil der erfindungsgemäss einzusetzenden TDI-Destillationsrückstände oberhalb von ca. 250 °C; jedoch tritt oberhalb von ca. 280 °C Zersetzung unter Gasentwicklung ein, ohne dass die Destillationsrückstände schmelzen.

Die, gegebenenfalls mit Wasser benetzte oder beim Denaturierungsprozess im Rührkessel in Wasser suspendierte, sehr grobkörnige TDI-Rückstandsschlacke wird erfindungsgemäss zunächst vorzugsweise mit Hilfe einer Zerkleinerungsmaschine, beispielsweise mit einem Schneidgranulator oder einer Hammermühle, auf weniger als 3 mm vorzerkleinert und anschliessend zu einem beliebigen Zeitpunkt nach bekannten Mahlverfahren entweder in der Nass- oder Trockenphase auf eine für die vorgesehene Verwendung erforderliche Endfeinheit gebracht.

Wenn die erfindungsgemässen TDI-Rückstände, beispielsweise beim grosstechnisch praktizierten, oben beschriebenen Denaturierungsprozess, in Wasser anfallen und vorgesehene Folgereaktionen in wässriger Phase ausgeführt werden können, bietet sich besonders ökonomisch und umweltfreundlich eine Nassfein- oder Nassfeinstzerkleinerung in diskontinuierlich oder kontinuierlich arbeitenden, gegebenenfalls zweistufig hintereinander geschalteten Maschinen an. Die Feststoffkonzentrationen liegen während der Nassmahlung vorzugsweise zwischen 15 und 45 Gew.-%. Neben Rohr- und Kugelmühlen kommen besonders vorteilhaft Zahnkolloid-, Trigonal-Zahnring-, Korundscheiben- und Rührwerkskugelmühlen in Frage. Für besonders feine Korngrössen eignet sich beispielsweise die Kombination Zahnkolloid- und Rührwerkskugelmühle.

In speziellen Fällen können bereits bei dem oben beschriebenen Denaturierungsprozess NH-Additionsreaktionen durchgeführt werden, indem man beispielsweise die bei der Produktion anfallende, meistens über 150 °C heisse, zähflüssige TDI-Rückstandsschmelze direkt in mit NH-Verbindungen versetztes Wasser einrührt.

Zweckmässig arbeitet man hierbei je nach Korngrösse mit einem Unterschuss an NH-Verbindungen in starker, wässriger Verdünnung und rührt mit sehr grosser Turbulenz, gegebenenfalls bereits unter Mitverwendung einer Zerkleinerungsmaschine, zwecks Ausbildung eines feinkörnigeren TDI-Rückstandes.

Auf diese Weise wird beispielsweise bei der Denaturierung in wässriger Ammoniaklösung oder Ammoniak abspaltenden Lösungen, wie z.B. Ammonium(bi)carbonatlösung, eine TDI-Rückstandsschlacke gewonnen, die einen erhöhten Gehalt an – zum Teil nur monosubstituierten-externen Harnstoffgruppen aufweist, die für spätere Kondensationsreaktionen besonders leicht zugänglich sind.

Die Denaturierung in Gegenwart von ionomeren Aminen führt direkt zu Salzgruppen enthaltenden oder zur Salzbildung befähigten TDI-Rückständen.

Die Zerkleinerung in wässriger Phase kann so gesteuert werden, dass infolge der bei der Mahlung auftretenden (und gegebenenfalls durch Kühlung regulierbaren Wärme und wegen der Erzeugung frischer Schnittflächen bei gleichzeitiger starker Vergrösserung der Mahlgutoberfläche auch ohne externe Wärmezufuhr Reaktion der TDI-Rückstandsschlacke mit dem Wasser eintritt. Selbstverständlich können beim Mahlen im wässrigen Medium auch durch Zugabe reaktionsfähiger Verbindungen andere Reaktionen bewirkt werden, beispielsweise Polyadditionen mit NH-Verbindungen oder Polykondensationen mit Carbonylverbindungen. In speziellen Fällen kann beim Mahlvorgang ein Teil oder das gesamte Wasser durch eine andere, gegebenenfalls gegenüber Isocyanaten reaktionsfähige Gruppen aufweisende, Flüssigkeit ersetzt werden, die jeweils nach dem späteren Verwendungszweck ausgewählt wird.

Die bei der Nasszerkleinerung erhaltenen, je nach Arbeitsweise noch geringe Mengen freier NCO-Gruppen aufweisenden oder NCO-freien TDI-Rückstandsschlacken werden entweder als sehr feinteilige Suspensionen, Pasten oder (nach Isolierung des Suspensionsmittels) Pulver in derselben Weise wie die durch Trockenzerkleinerung erhältlichen TDI-Rückstands-Pulver eingesetzt.

Für die Trockenmahlung wird unter 2–3 mm vorzerkleinerte und bevorzugt bei Temperaturen unter 50 °C vorgetrocknete, nicht wesentlich über 15 Gew.-%, bevorzugt unter 5 Gew.-% Feuchtigkeit enthaltende TDI-Rückstandsschlacke eingesetzt. Bei der Wahl der Trockenzerkleinerungsmaschinen sind im wesentlichen nur die gewünschte Endfeinheit und Korngrössenverteilung, aber auch die Mahlkosten von vorrangiger Bedeutung. Die erfindungsgemäss eingesetzten Rückstandsschlacken sind im Vergleich zu Kunststoffen sehr hart und wegen ihres hohen Vernetzungsgrades in den üblichen Zerkleinerungsmaschinen ohne Kühlungsprobleme bei Temperaturen bis ca. 220–300 °C mahlbar, ohne zu erweichen, was insbesondere zur Erzielung von Feinstkorngrössen im Bereich von unter 1 µm bis 5 µm von besonderer Bedeutung ist.

Verwendung finden beispielsweise Stifts-, Kugel- oder Pralltellermühlen, ferner Luftstrommühlen wie Schlagkreuz, Zahnkranz- oder Turbomühlen, aber besonders bevorzugt Dampfstrahl- oder Luftstrahlmühlen, weil in diesen die Zerkleinerung hauptsächlich durch gegenseitige Teilchenstösse, weniger durch Wandstösse, stattfindet und schon in einem Durchsatz Feinstkorngrössen erzielt werden. Selbstverständlich sind auch bei der Trockenzerkleinerung sowohl einals auch mehrstufige diskontinuierliche oder kontinuierliche Mahlprozesse möglich, bei denen entweder TDI-Rückstands-Feinstpulver mit freien Isocyanatgruppen oder (durch Zugabe flüssiger Reaktionskomponenten, die während der Zerkleinerung eine Modifizierungsreaktion, im Falle der Verwendung niedrig siedender Komponenten sogar aus der Gasphase, bewirken) TDI-Rückstandsschlacken-Folgeprodukte in Feinstkorngrössen in grosstechnischen Mengen produziert werden können.

Überraschend gut geeignet sind auch für die weitere Zerkleinerung in allen Labor- und Produktionsgrössen im Handel erhältliche Mischapparaturen (die gleichzeitig auch als Reaktoren dienen), wenn sie beispielsweise mit pflugscharähnlichen Mischelementen und (bevorzugt mehrstufigen) Messerköpfen ausgerüstet sind.

Erst durch das Zerkleinern in der Nassphase oder im trockenen Zustand werden die in der Rückstandsschlacke inkludierten restlichen reaktiven Gruppen der obengenannten Art für die verschiedensten chemischen Reaktionen zugänglich gemacht. Die erfindungsgemäss erhaltenen TDI-Rückstandspulver können daher vor ihrer Verwendung als reaktiver Füllstoff den verschiedensten chemischen Modifizierungen unterworfen werden. Diese Modifizierungsreaktionen können sowohl in der Gasphase als auch in Gegenwart eines flüssigen Reaktionsmediums stattfinden.

Bei den erwähnten, zum Teil bereits beim Mahlprozess durchführbaren, Modifizierungsreaktionen werden insbesondere die in den TDI-Rückstandspulvern noch enthaltenen geringen Mengen an freien Isocyanatgruppen zur Reaktion gebracht. So kann man beispielsweise durch den feingemahlenen TDI-Destillationsrückstand Ammoniakgas oder gasförmige Amine – bevorzugt nach dem Gegenstromprinzip – leiten, wobei in exothermer Reaktion auch ohne mechanische Durchmischung innerhalb sehr kurzer Zeit (je nach Feinheit des Pulvers bis zu weniger als 1 Minute) NCO-Freiheit erreicht ist. Dabei entstehen im TDI-Destillationsrückstand zusätzliche Harnstoffgruppierungen, die besonders leicht Kondensationsreaktionen mit Carbonylverbindungen, insbesondere Formaldehyd, eingehen können, welche gegebenenfalls gleichzeitig oder im Anschluss an die Reaktionen mit Ammoniak bzw. Aminen durch das Pulver geleitet werden können. Anstelle von Formaldehyd-Ammoniak-Gemischen kann auch Urotropin unter hydrolysierenden Bedingungen zur Ausbildung von Methylenharnstoffbrücken eingesetzt werden. Geeignete verdampfbare Amine sind beispielsweise Äthylamin, Diäthylamin, Dimethylamin, Butylamin, Dibutylamin, Äthylendiamin und Propylendiamin; als Carbonylverbindungen kommen neben Formaldehyd z.B. Acetaldehyd, Propionaldehyd, Butyraldehyd, Aceton oder Methyläthylketon in Frage.

Eine weitere Modifizierungsreaktion aus der Gasphase ist die Umsetzung mit Wasserdampf. Während die Reaktion der freien Isocyanatgruppen der feingepulverten Rückstandsschlacke mit Wasserdampf auch bei Verwendung von fein gemahlenen TDI-Destillationsrückständen unter 100 °C nur langsam abläuft, kann man eine quantitative Polyharnstoffbildung innerhalb kurzer Zeit erreichen, wenn man Reaktionstemperaturen deutlich oberhalb des Siedepunkts von Wasser, bevorzugt oberhalb 130 °C, anwendet. Bei ausreichend zerkleinerter TDI-Rückstandsschlacke genügt es jedoch, diese, mit Wasser benetzt, ohne weitere Durchmischung den erwähnten Temperaturen auszusetzen. In analoger Weise können selbstverständlich auch wässriger Ammoniak, wässrige Aminlösungen oder Alkohole und Carbonsäuren, gegebenenfalls ganz oder teilweise in gasförmigem Zustand, für Modifizierungsreaktionen mit den freien NCO-Gruppen eingesetzt werden, beispielsweise Methanol, Äthanol, Propanol, Isopropanol, Butanol, Äthylenglykol, Diäthylenglykol, Propylenglykol, Dipropylenglykol, Ameisensäure oder Essigsäure.

Für die Modifizierung des TDI-Rückstandspulvers in Wasser oder einem organischen inerten Lösungsmittel als Reaktionsmedium sind vor allem unter dem Einfluss von Katalysatoren ablaufende Reaktionen der freien Isocyanatgruppen untereinander von Interesse. Beispiele hierfür sind die Bildung von Uretdiongruppen in Gegenwart von Dimerisierungskatalysatoren wie z.B. trisubstituierten Phosphinen oder die Bildung von Carbodiimidgruppen in Gegenwart von Phospholinoxid. Eine andere Modifizierungsmöglichkeit besteht darin, an die freien Isocyanatgruppen der pulverisierten TDI-Rückstandsschlacke schwach saure Verbindungen (z.B. Bisulfit oder andere Isocyanatabspalter) zu addieren, die später zu jedem gewünschten Zeitpunkt bei höheren Temperaturen unter Freisetzung der Isocyanatgruppen wieder abgespalten werden können. Selbstverständlich können aus flüssiger Phase auch die verschiedenartigsten Modifizierungsreaktionen mit Verbindungen erfolgen, welche insbesondere gegenüber den Isocyanatgruppen der Rückstandspulver reaktive Gruppen (insbesondere Hydroxyl-, Amino- und/oder Carboxylgruppen) aufweisen. Gegebenenfalls kann man durch derartige Modifizierungsreaktionen in das Rückstandspulver auch anionische und/oder kationische oder zur Salzbildung befähigte Gruppen einführen. Die meisten dieser Verbindungen reagieren nicht nur mit den freien NCO-Gruppen des Rückstands sondern addieren sich auch an dessen Carbodiimidbindungen. Geeignete 1- und mehrwertige Alkohole, Amine und Carbonsäuren, welche gegebenenfalls noch weitere funktionelle Grupen (beispielsweise ionische und/oder zur Salzbildung befähigte Gruppen) aufweisen können, sind beispielsweise in den DE-Offenlegungsschriften 2 550 796 und 2 550 797 als Reaktionspartner für Polyisocyanate bei der in situ-Herstellung von Polyisocyanat-Polyadditionsprodukten in Polyhydroxylverbindungen beschrieben. Für Modifizierungsreaktionen geeignete Amine werden auch in der DE-OS 2 714 289, geeignete Carbonsäuren in der DE-OS 2 714 293 (in Zusammenhang mit der Addition derartiger Verbindungen an Carbodiimidgruppen) beschrieben. Auch Phosphite können gemäss DE-OS 2 714 292 unter Ausbildung von Phosphonoformamidingruppen an die Carbodiimidbindungen des TDI-Rückstandspulvers addiert werden. Selbstverständlich können auch die schon oben beschriebenen Modifizierungsreaktionen mit Carbonylverbindungen in einem flüssigen Reaktionsmedium stattfinden. Geeignete Carbonylverbindungen werden beispielsweise in der DE-OS 2 639 254 beschrieben.

Als Reaktionsmedium können für die eben beschriebenen Modifizierungsreaktionen neben Wasser die bekannten organischen Lösungsmittel mit einem Siedepunkt bevorzugt unter 150 °C, besonders bevorzugt unter 130 °C, eingesetzt werden, die jedoch, wie oben ausgeführt wurde, für den pulverisierten TDI-Destillationsrückstand praktisch Nichtlöser sind, d.h. lediglich als Suspensionsmittel fungieren.

Beispielhaft seien Methylenchlorid, Aceton, Petroläther, Cyclohexanon, Äthylacetat, Tetrahydrofuran, Benzol, Toluol und Xylol genannt. Nach erfolgter Modifizierungsreaktion kann das flüssige Reaktionsmedium durch Filtration und anschliessende Trocknung oder durch Destillation entfernt werden. In vielen Fällen genügen schon sehr geringe Mengen des flüssigen Reaktionsmediums (häufig unter 10 Gew.-%, bezogen auf Rückstandspulver), um eine Auflösung des Modifizierungsmittels bzw. dessen gleichmässige Verteilung im TDI-Rückstandspulver zu gewährleisten. Bei Anwendung von Temperaturen, die über dem Siedepunkt des Lösungsmittels liegen, wird in einem Druckgefäss gearbeitet. Gemäss einer besonderen Variante des erfindungsgemässen Verfahrens werden in den feinpulverisierten TDI-Destillationsrückstand copolymerisierbare, ungesättigte Gruppen eingeführt. Dies kann mit Hilfe aller oben beschriebenen Modifizierungsreaktionen geschehen, indem man beispielsweise das Rückstandspulver mit einer ungesättigten Carbonylverbindung (z.B. Acrolein, Crotonaldehyd oder Methylvinylketon), einer ungesättigten Hydroxylverbindung (z.B. Allylalkohol oder Hydroxyäthylester von Acrylsäure oder Methacrylsäure) und/oder ungesättigten Carbonsäuren (z.B. Acrylsäure, Methacrylsäure, Maleinsäure oder Fumarsäure) umsetzt. Derartig modifizierte Rückstandspulver eignen sich insbesondere für die Mitverwendung in radikalischen Polymerisationsreaktionen.

Die sehr fein zerkleinerten NCO-haltigen oder NCO-freien TDI-Rückstandsschlacken können auch – beispielsweise in chlorierten Kohlenwasserstoffen suspendiert – durch Umsetzung mit Schwefeltrioxid oder Chlorsulfonsäure mit anschliessender Verseifung in hydrophile aromatische polysulfonsaure Derivate überführt werden, wobei die Sulfonsäuregruppen teilweise an die vorhandenen Carbodiimidgruppen Additionsreaktionen eingehen.

Mit Aminen, Ammoniak oder Alkali entstehen die entsprechenden arylsulfonsauren Salze. Wurden zuvor in das Rückstandspulver, mittels der oben beschriebenen Reaktionen, Verbindungen mit tertiärem Stickstoff eingeführt, dann können die sulfonsauren TDI-Rückstandspulver amphothere Systeme ausbilden, bei denen sich sowohl die positive als auch die negative Ladung im gleichen Molekül befindet. In vielen Fällen kann man auch getrennt hergestellte anionische und kationische TDI-Rückstandspulver in einem beliebigen Ionenäquivalentverhältnis mischen und beispielsweise als Ionenaustauscher einsetzen.

Die beschriebenen Modifizierungsreaktionen mit den vorzerkleinerten TDI-Rückstandsschlakken können in speziellen Fällen, bei denen pastöse Zwischenstufen auftreten, mit Vorteil auch in selbstreinigenden Schneckenmaschinen durchgeführt werden. Geeignete Extruder mit selbstreinigender Schneckengeometrie sind an sich bekannt und werden z.B. in "Schneckenmaschinen in der Verfahrenstechnik" von H. Hermann, Springer-Verlag, Berlin/Heidelberg/New York, 1972, S. 161–170, und insbesondere auch in den US-Patentschriften 3963679 und 3993641 beschrieben.

Die Durchführung von organisch-chemischen Reaktionen in Reaktionsschnecken ist zwar bekannt. Im allgemeinen bediente man sich jedoch der Reaktionsschnecken zur Herstellung und Modifizierung von Polymerschmelzen, wobei Temperaturen oberhalb der Erweichungspunkte der jeweiligen Produkte angewendet werden. Die Reaktionen des erfindungsgemässen Verfahrens gehen hingegen immer von festem TDI-Rückstandspulver aus. Danach werden gegebenenfalls verschiedene pastenartige Zustände durchlaufen, in denen in noch vorhandenen flüssigen Reaktionskomponenten die fest zerkleinerte TDI-Rückstandsschlacke suspendiert ist. In diesen Phasen neigt das Reaktionsgut besonders stark zum Verkleben und Verklumpen. Letztlich, nach weitgehender Umsetzung der zudosierten, bevorzugt niedermolekularen Reaktionskomponenten, wird ein hartes, granuliertes oder körniges Endprodukt erhalten.

Es war nicht zu erwarten, dass mit den genannten Schneckenmaschinen chemische Reaktionen durchführbar sein würden, bei welchen die erfindungsgemässen nicht unzersetzt schmelzbaren TDI-Rückstände eingesetzt werden. Es war besonders überraschend, dass mittels derartiger Schneckenmaschinen die Modifizierungsreaktion sogar in den in Wasser denaturierten, duromeren TDI-Rückständen im technischen Massstab praktisch lösungsmittelfrei so gut unter Kontrolle gehalten werden können, dass direkt beliebig lange lagerstabile, pressbare Produkte erhalten werden. Insbesondere war es überraschend, dass beim Austritt aus der Schnecke bereits ein feines rieselfähiges Pulver anfällt, das ohne weitere Vermahlung für viele Einsatzgebiete verwendet werden kann.

Es ist erfindungsgemäss auch möglich, die TDI-Rückstandspulver zu einem beliebigen Zeitpunkt mit pulverförmiger polymerer Blausäure (sogenannten Azulminsäuren) zu vermischen. Azulminsäuren weisen ebenfalls reaktive Gruppierungen (insbesondere Aminogruppen) auf, welche sowohl mit den additionsfähigen Gruppen des TDI-Rückstands (z.B. NCO- und Carbodiimidgruppen) als auch mit den bei der Rückstands-Aufarbeitung gegebenenfalls mitverwendeten Modifizierungsmitteln (z.B. Carbonylverbindungen) reagieren können. Verfahren zur Herstellung von Azulminsäuren sowie ihre Stabilisierung gegenüber Blausäureabspaltung werden z.B. in Houben-Weyl, Methoden der Organ. Chemie (1952), Band 8, Seite 261, in Angew. Chem. 72 (1960), Seite 379–384, den DE-Patentschriften 662 338 und 949 600 sowie den DE-Offenlegungsschriften 28 06 019 und 28 06 020 beschrieben.

Die erfindungsgemäss aufgearbeiteten TDI-Destillationsrückstände können unter Anwendung von Druck und Hitze, ggf. in Formen, zu homogenen Platten bzw. Formkörpern oder solchen mit Zellstruktur verpresst werden oder als reaktiver Füllstoff für die verschiedensten durch Polyadditions-, Polykondensations- und/oder Polymerisationsreaktionen herstellbaren Kunststoffe in einem beliebigen Anteil (in der Regel 2–60, bevorzugt 10–50, besonders bevorzugt 15–40 Gew.-%, bezogen auf Gesamtmenge an modifiziertem Kunststoff) eingesetzt werden.

Bevorzugt werden die erfindungsgemäss erhaltenen Pulver in Aminoplast- und Phenoplastharze als Füllstoff eingearbeitet, wobei sie vorteilhafterweise schon bei der an sich bekannten Herstellung dieser Harze aus Carbonylverbindungen (insbesondere Formaldehyd) und Aminoplast- bzw. Phenoplastmonomeren (vorzugsweise Harnstoff, Melamin und/oder Phenol) anwesend sind und über ihre zahlreichen reaktiven Gruppierungen in das sich bildende Polymere chemisch eingebaut werden. In diesem Zusammenhang geeignete Carbonylverbindungen bzw. Aminoplast- und Phenoplastmonomere werden z.B. in den DE-Offenlegungsschriften 2 324 134, 2 639 254 und 2 713 198 beschrieben.

Auch bei der Herstellung von Epoxidharzen können die erfindungsgemäss aufgearbeiteten TDI-Destillationsrückstände als reaktiver Füllstoff mitverwendet werden.

Die freien Isocyanatgruppen des feinstverteilten TDI-Rückstandes können sowohl mit den in technischen Epoxidharzen stets vorhandenen Hydroxylgruppen, als auch bei höheren Temperaturen, bevorzugt über 160 °C, mit den Epoxidgruppen unter Bildung von Oxazolidonringen reagieren. Zusätzlich können auch amino- oder carboxylgruppenhaltige Härter mit den in der TDI-Rückstandsschlacke bis zu ca. 17 Gew.-% vorhandenen Carbodiimidgruppen reagieren.

Bevorzugt werden dafür TDI-Rückstandsfeinstpulver mit einer mittleren Teilchengrösse $<50$ µm, bevorzugt unter 10 µm, in flüssige Diepoxide bei Raumtemperatur oder erhöhter Temperatur homogen eingemischt und der Härter, beispielsweise eine Aminoverbindung, Dicarbonsäure oder ein Dicarbonsäureanhydrid, unter den an sich bekannten Verfahrensbedingungen zur Reaktion gebracht. In vielen Fällen können (insbesondere, wie oben ausgeführt, bei Härtungstemperaturen über 100 °C) die polyfunktionellen TDI-Rückstandspulver partiell gleichzeitig sowohl mit dem Epoxidharz als auch mit dem Härter während der Epoxid-Polyaddition reagieren, so dass der reaktionsfähige Füllstoff durch Hauptvalenzbindungen in das ausgehärtete Giessharz eingebaut ist.

Die in Mengen von insgesamt bis ca. 50 Gew.-%, bezogen auf Endprodukt, zugesetzten TDI-Rückstandspulver erhöhen die Härte und vermindern die Brennbarkeit der auf Epoxidbasis hergestellten Harze und vermindern ausserdem den Schrumpf. Bei grossen Giesslingen tritt während der Härtung im Inneren eine geringere Temperatursteigerung auf als bei füllstofffreien Giesslingen.

In speziellen Fällen ist auch eine Kombination der Epoxidharze und der feinstpulverisierten TDI-Rückstände mit Phenol, Melamin und/oder Formaldehyd möglich, beispielsweise für die Herstellung von Schleifmitteln, wie Schleif- oder Polierscheiben.

Die erfindungsgemäss aufgearbeiteten TDI-Rückstandsschlacken können jedoch auch als reaktiver Füllstoff bei der Herstellung von Cyanatharzen, beispielsweise aus den Ausgangsverbindungen, wie sie in der DE-OS 2 260 487 beschrieben werden, mitverwendet werden.

Insbesondere TDI-Rückstandspulver, in welche gegebenenfalls copolymerisierbare, ungesättigte Gruppierungen eingeführt wurden, können auch mit Vorteil bei der an sich bekannten Herstellung von Kunststoffen durch Polymerisation oder Copolymerisation olefinisch ungesättigte Gruppen aufweisender Monomerer eingesetzt werden. Als derartige Monomere seien beispielhaft Acrylnitril, Styrol, Butadien, Acrylsäure, Methacrylsäure, Vinylchlorid, Vinylacetat sowie ungesättigte Polyester genannt.

Die Polymerisationsreaktionen werden (in Gegenwart der sehr feinteiligen TDI-Pulver) bevorzugt in einem flüssigen Medium, beispielsweise in Wasser oder einem organischen Lösungsmittel durchgeführt.

Die erfindungsgemässen, sehr feinteiligen, gegebenenfalls noch freie NCO-Gruppen enthaltenden TDI-Rückstandspulver können durch Polymerisationsreaktionen in einfacher Weise umhüllt werden, indem man monomere oder oligomere Vinylverbindungen in Anwesenheit der feinstzerkleinerten Rückstandsschlacke, gegebenenfalls in einem gegenüber Isocyanatgruppen inerten Lösungsmittel (co)polymerisiert. Je nach Schmelzbereich der Polymerisathüllen können bei erhöhten Temperaturen solche unbeschränkt lagerfähigen Isocyanat-Rückstandspulver, gegebenenfalls mit weiteren H-aciden Komponenten unter Ausbildung von Hauptvalenzbindungen, zu einem beliebigen Zeitpunkt als reaktiver Füllstoff eingesetzt werden. Je nach Menge und Verträglichkeit der Polymerisathüllen mit den TDI-Rückstandspulvern und den gegebenenfalls noch zugemischten Komponenten können derartige (zunächst als feinteilige Pulver vorliegende) Kombinationen unter Druck, gegebenenfalls in Anwesenheit von Treibmitteln, oberhalb des Erweichungspunktes des Polymerisats in die gewünschte Form gebracht werden. Bei Verwendung linearer Polymerisate ist die Formgebung sogar mit Hilfe von Spritzgussmaschinen möglich.

Die gegebenenfalls modifizierten, feinteiligen TDI-Rückstandspulver werden in diesen Fällen in einer Menge von 5 bis 80 Gew.-%, bevorzugt 20 bis 60 Gew.-%, bezogen auf Gesamtgewicht der Mischung, verwendet.

Die wie oben beschrieben durch Reaktion mit Glykolen modifizierten beliebig lange lagerfähigen TDI-Rückstandspulver können überraschenderweise unter Druck- und Temperaturanwendung zu Formkörpern verpresst werden. Bevorzugt sind Presstemperaturen von 150–230 °C, bevorzugt 170–200 °C, wobei der spezifische Druck zwischen 5–100, bevorzugt 10–40 bar/$cm^2$ eingestellt wird. Das Schüttgewicht der mit Glykolen modifizierten TDI-Rückstandspulver liegt je nach Teilchengrösse zwischen 430–800 g/l, so dass je nach Einstellung des Raumgewichtes überraschenderweise homogene Presslinge mit 1,2–1,3 g/$cm^3$ oder solche mit zelliger Struktur (0,7–1,2 g/$cm^3$) ohne Verwendung eines Treibmittels entstehen.

Da die nur mit Wasser modifizierten TDI-Rückstandspulver auch in sehr feinteiliger Form unter

den angegebenen Pressbedingungen nicht thermoplastisch verformbar, sondern lediglich tablettierbar sind, d.h. sich wie ein Duromer verhalten, muss angenommen werden, dass unter den Pressbedingungen die stark vernetzten mit bevorzugt niedermolekularen Glykolen modifizierten Rückstandspulver wenigstens teilweise unter Linearisierung reagieren. Die zerkleinerten Presslinge können wiederholt unter den gleichen Bedingungen verpresst werden, obwohl ihr Erweichungs- oder Schmelzpunkt drucklos meistens weit über 250–270 °C liegt. Wegen dieser Eigenschaft ist es möglich, die Pressteile bei der angewandten Presstemperatur ohne jegliche Abkühlung und Verformung aus der Presse zu nehmen.

Bei der Verwendung von besonders feinpulverigen, mit grösseren Mengen an Glykolen modifizierten TDI-Rückständen können auch Metallteile bei extrem hohen Temperaturen, bevorzugt über 250 °C, durch Schmelzsintern im Wirbelbett mit einer Schutzschicht aus den modifizierten TDI-Rückständen überzogen werden, die bei Feuereinwirkung wie ein Blählack brandhemmend wirkt.

Die Verwendung der modifizierten Rückstandspulver als Pressmassen bzw. Sintermassen ist ebenfalls Gegenstand der vorliegenden Erfindung.

Besondere Bedeutung besitzen die erfindungsgemäss aufgearbeiteten TDI-Destillationsrückstände auch als reaktiver Füllstoff und gleichzeitig Bindemittel bei der Herstellung von Platten oder Formteilen in Heisspressen durch Bindung von lignocellulosehaltigen Fasern, Spänen oder Lagen. Als zusätzliches Bindemittel dienen dabei vorzugsweise die zu diesem Zweck an sich bekannten Kondensationsprodukte des Formaldehyds mit Harnstoff, Melamin oder Phenol, insbesondere in Form ihrer wässrigen Lösungen oder Dispersionen. Aus DE-OS 1 669 759 und DE-AS 1 653 169 ist es bereits bekannt, neben oder an Stelle von derartigen Bindemitteln bei der Herstellung von Presswerkstoffen auf Basis lignocellulosehaltiger pflanzlicher Rohstoffe auch Polyisocyanate mitzuverwenden.

Es wurde nunmehr gefunden, dass sich als (ggf. zusätzliches) Bindemittel die erfindungsgemäss modifizierten TDI-Rückstandsschlacken hervorragend eignen. Sie werden dabei in einer Menge von mindestens 2, bevorzugt 2–90, besonders bevorzugt 10–60 Gew.-%, bezogen auf Gesamtgewicht des Formkörpers, eingesetzt.

Geeignete lignocellulosehaltige Rohstoffe, welche auf diese Weise gebunden werden können, sind beispielsweise Holz, Rinde, Kork, Bagasse, Stroh, Flachs, Bambus, Erdnusschalen, Alfagras, Reisschalen, Sisal- und Kokosfasern. Das Material kann dabei in Form von Granulaten, Spänen, Fasern oder Mehl vorliegen und einen Wassergehalt von 0 bis 35 Gew.-%, vorzugsweise von 5 bis 25 Gew.-%, aufweisen. Es wird ggf. mit Formaldehyd oder einem Formaldehydharz in einer Menge von 1 bis 50, vorzugsweise 5 bis 20 Gew.-% (berechnet als Feststoff, bezogen auf Gesamtgewicht des Formkörpers) sowie der oben angegebenen Menge an TDI-Rückstandspulver versetzt und – im allgemeinen unter Einwirkung von Druck und Hitze – zu Platten oder Formkörpern verpresst.

In der selben Weise können auch mehrlagige Platten oder Formteile aus Furnieren, Papieren oder Geweben hergestellt werden. Auch mehrschichtige Platten oder Formteile aus Furnieren und Streifen-, Stab- oder Stäbchenmittellagen, sogenannte Tischlerplatten, können auf diesem Weg hergestellt werden, indem man die Furniere wie oben beschrieben mit dem TDI-Rückstandspulver und ggf. dem konventionellen Bindemittel behandelt und anschliessend mit den Mittellagen – in der Regel bei erhöhter Temperatur und erhöhtem Druck – verpresst. Vorzugsweise werden dabei Temperaturen von 100 bis 250 °C, besonders bevorzugt 130 bis 200 °C, eingehalten. Der Anfangspressdruck liegt vorzugsweise zwischen 5 und 150 bar; im Laufe des Pressvorgangs fällt dann der Druck meist bis gegen 0 ab. Selbstverständlich können auch die an sich bekannten organischen oder anorganischen Schutzmittel gegen Pilzbefall, Insekten oder Feuereinwirkung in einer Menge von ca. 0,05 bis 30 Gew.-%, vorzugsweise 0,5 bis 20 Gew.-%, mitverwendet werden.

Gegenstand der Erfindung ist somit auch ein Verfahren zur Herstellung von Platten oder Formteilen durch Heissverpressen lignocellulosehaltiger Rohstoffe mit einem Bindemittel, welches dadurch gekennzeichnet ist, dass man als (ggf. zusätzliches) Bindemittel mindestens 2 Gew.-%, bezogen auf Gesamtgewicht des Formkörpers, der erfindungsgemäss modifizierten TDI-Rückstandsschlacken verwendet.

Die erfindungsgemäss aufgearbeiteten Rückstandsschlacken können auch ganz allgemein Lacken und Überzügen der verschiedensten Art als reaktiver Füllstoff beigemengt werden (ca. 2 bis 70 Gew.-%, bevorzugt 5 bis 40 Gew.-%, bezogen auf Gesamtfeststoffgehalt). Beispiele hierfür sind Dach- oder Bodenbeläge, Fugenverguss- und Spachtelmassen der an sich bekannten Art, gegebenenfalls unter Mitverwendung von Bitumen- bzw. Teermassen. Eine weitere Verwendungsmöglichkeit besteht in der Modifizierung thermoplastischer Kunststoffe. Die Rückstandspulver werden dabei mit dem Thermoplasten in einer Menge von 3 bis 200 Gew.-%, bevorzugt 10 bis 100 Gew.-%, bezogen auf Thermoplast, mittels an sich bekannter Techniken (z.B. durch Co-Extrusion) vermischt. Man kann auf diese Weise z.B. die Härte weicher Thermoplasten wie Weich-PVC erheblich erhöhen; es ist aber auch möglich, die Rückstandspulver weichmacherhaltiger harten Polymeren wie Hart-PVC zuzusetzen und auf diese Weise einen Teil des teuren Hartpolymerisats einzusparen.

Es ist auch möglich, die (bevorzugt chemisch modifizierten) TDI-Rückstandspulver mit zerkleinerten Kunststoffschäumen, besonders vorteilhaft mit Polyurethanschaumabfällen, zu vermischen und, gegebenenfalls unter Mitverwendung gebräuchlicher Bindemittel, bei Temperaturen über 100 °C, bevorzugt über 160 °C, unter Druck zu

verpressen. Je nach Thermoplastizität und Pressbedingungen erhält man homogene oder zellige Produkte mit guten Eigenschaften.

Werkstoffe dieser Art können beispielsweise zur Herstellung von Konstruktionsteilen oder Möbeln dienen.

Bei allen erwähnten Anwendungszwecken können die erfindungsgemässen TDI-Rückstandspulver auch in beliebigen Mengenverhältnissen, z.B. 90:10 bis 10:90, mit Azulminsäuren in pulverisierter Form eingesetzt werden.

Ebenso können die TDI-Rückstandspulver auch in Kombination mit üblichen anorganischen und/oder organischen Füllstoffen eingesetzt werden, wie z.B. Kreide, Kaolin, Gips, Kieselsäure, Sand, Aktivkohle und Kunststoffpulver.

Die folgenden Beispiele dienen der Erläuterung der vorliegenden Erfindung; wenn nicht anders vermerkt, sind Mengenangaben als Gewichtsteile bzw. Gewichtsprozente zu verstehen.

Experimenteller Teil

Tabelle1

Charakterisierung der in den Patentbeispielen verwendeten TDI-Rückstände, die zwangsweise bei der Produktion von monomeren Toluylendiisocyanaten als in inerten Lösungsmitteln unlösliche Destillationsrückstände angefallen sind.

| | Art des TDI-Rückstandes | NCO-Gehalt % | Art der Zerkleinerungsmaschinen | | Beginn der Zers. °C | Teilchen grösse µm |
|---|---|---|---|---|---|---|
| 1 | 2 | 3 | 4 | 5 | 6 | 7 |
| I | 80 D | 7,2 | - | HM + KZM | 280 | 130 |
| II | 80 D | 4,7 | HM | | 295 | 400 |
| III | 80 D | 8,4 | HM + LSM | | 275 | 20 |
| IV | 80 D | 9,9 | HM + LSM | | 270 | 4 |
| V | 80 | 13,9 | SG + TM | | 265 | 150 |
| VI | 65 D | 6,8 | - | HM + TZM | 270 | 85 |
| VII | 65 D | 11,6 | HM + TM | | 255 | 110 |

Erläuterung zu Tabelle 1

Spalte 1: Laufende Nummer (in römischen Zahlen) des in den Patentbeispielen verwendeten TDI-Destillationsrückstandes

Spalte 2: Art des TDI-Rückstandes

80 bzw. 65 = Isomerenverhältnis der aus dem Rohprodukt destillativ isolierten monomeren Diisocyanat-Gemische (2,4-TDI:2,6-TDI = 80:20 bzw. 65:35).

D = Denaturierung nach Isolierung des monomeren TDI durch Eintragen des 150 bis 200 °C heissen, teerartigen, extrem zähflüssigen TDI-Pfannenrückstandes in mit Wasser gefüllte Rührbehälter unter Ausbildung einer sehr grobteiligen TDI-Rückstandsschlacke, $CO_2$-Entwicklung und Polyharnstoffbildung (s. unten).

Spalte 3: NCO-Gehalt in Gew.-%, bezogen auf TDI-Rückstand (Feststoff).

Die NCO-Bestimmung erfolgt direkt nach dem Zerkleinern bei 50 °C in Aceton mit einer gegebenenfalls zusätzlich auf unter 60 µm gemahlenen Probe.

Spalten 4 und 5: Art der verwendeten Vor- und Feinstzerkleinerungsmaschinen

Spalte 4: Trockenzerkleinerung

HM = Hammermühle

LSM = Luftstrahlmühle

SG = Schneidgranulator

TM = Turbomühle

Spalte 5: Nasszerkleinerung

KZM = Kolloidzahnringmühle

TZM = Trigonalzahnringmühle

Spalte 6: Beginn der Zersetzung in °C

Spalte 7: Teilchengrösse in µm von ca. 50 Gew.-% des Mahlgutes.

Anmerkung zu TDI-Rückstand V:

Eine Isolierung des TDI-Pfannenrückstandes in reiner Form (d. h. ohne Denaturierung) ist nur unter besonderen Vorsichtsmassnahmen möglich, indem man für eine sofortige starke Abkühlung der 150–200 °C heissen Schmelze unter Sauerstoffausschluss sorgt und die exotherme Selbstentzündung unterbindet. Die erstarrte, teerartige Masse ist auch in Pulverform nicht mehr aufschmelzbar.

Denaturierung von Toluylendiamin-Phosgenierungsrückständen

TDI-Rückstände I–IV sowie VI und VII (Tabelle 1)

Der bei der Produktion von Toluylendiisocyanaten im Sumpf verbleibende Phosgenierungsrückstand, d. s. ca. 10 Gew.-% der theoretischen Monomerenausbeute, wird ca. 150–180 °C heiss, sehr zähflüssig in einen Ausrührkessel abgelassen, in dem mindestens die doppelte Menge Wasser vorgelegt wurde. Ein grosser Teil der freien Isocyanatgruppen reagiert unter Kohlendioxidabspaltung und Polyharnstoffbildung. Es entsteht bei diesem Denaturierungsprozess unter starker Erwärmung des Wassers eine grobteilige, sehr unregelmässig geformte, poröse Rückstandsschlacke, von der man in einer Mulde das Wasser ablaufen lässt, bis der durch Benetzung noch anhaftende Wassergehalt unter 10 Gew.-%, vorteilhafter für eine anschliessende Vorzerkleinerung in einer Hammermühle unter 5 Gew.-Proz., gesunken ist.

Zur Bestimmung des inkludierten Isocyanatgehaltes muss eine Probe mindestens auf unter 60 µm zerkleinert und in Aceton auf 50 °C erhitzt werden. Vergleichsweise wird bei Raumtemperatur nur etwa die Hälfte der freien NCO-Gruppen gefunden. Bei grobkörniger TDI-Rückstandsschlacke ist sogar nur ein Bruchteil davon zu erfassen. Je nach Korngrösse nimmt der NCO-Gehalt der mit Wasser benetzten, denaturierten Rückstandsschlacke bei Raumtemperatur innerhalb von Tagen (<500 µm) bis Wochen (>2-3 mm) allmählich ab. Die Verringerung des Gehaltes an freien Isocyanatgruppen wird unterbunden, indem man die auf unter 3 mm Korngrösse vorzerkleinerte, denaturierte TDI-Rückstandsschlacke bei Temperaturen unter 50 °C in einem Umluftschrank trocknet, bis der Wassergehalt zweckmässig unter 0,2 Gew.-Proz. gesungen ist, und unter Luftabschluss lagert.

Patentbeispiele 1–4
Polyadditionsreaktionen aus der Gasphase

Patentbeispiel 1

Der auf 200 µm Unterkorn 30%ig in Wasser zerkleinerte TDI-Rückstand I wird auf einer Nutsche abgepresst, auf Emailleblechen in ca. 2 cm-Schichten ausgebreitet und in einem Umluftschrank bei 130–145 °C etwa 3 Std. getrocknet, bis die vor der Thermobehandlung noch vorhandenen 7,2 Gew.-Proz. freier Isocyanatgruppen quantitativ hauptsächlich mit dem Wasserdampf unter zusätzlicher Polyharnstoffbildung reagiert haben.

Das trockene, rieselfähige Pulver hat ein Schüttgewicht von 560 g/l. Über 310 °C erfolgt allmähliche Zersetzung unter Dunkelbraunfärbung ohne zu schmelzen.

Patentbeispiele 2 und 3

In einer Kesselrührapparatur mit Schaufelrührer werden die in Tabelle 1 charakterisierten trokken zerkleinerten TDI-Rückstände II für Beispiel 2 bzw. VI für Beispiel 3 von unten durch Einleiten von Ammoniak begast. In exothermer Reaktion werden in Abhängigkeit von NCO-Gehalt und Korngrösse 40–60 °C erreicht; der Gehalt an freiem Isocyanat sinkt nach Zugabe der etwa äquivalenten Menge Ammoniak gegen Null.

Die mit freien Harnstoff-Endgruppen modifizierten, stark aufgehellten, unschmelzbaren Additionsprodukte sind als hochtemperaturbeständige Reaktionskomponente für Kondensationsreaktionen mit Carbonylverbindungen, insbesondere Formaldehyd, gegebenenfalls unter Mitverwendung von Harnstoff(en) oder Phenol(en) geeignet. Die Schüttgewichte betragen (Beispiel 2) 650 g/l und (Beispiel 3) 510 g/l.

Isocyanatabspalter-Additionsreaktion aus der Gasphase

Patentbeispiel 4

Eine Mischung aus
100,0 Gew.-Tln. trocken zerkleinertem TDI-Rückstand IV mit einer Teilchengrösse <10 µm und
28,6 Gew.-Tln. ε-Caprolactam
wird etwa 90 Minuten auf 120–140 °C erhitzt, bis der NCO-Gehalt auf Null gesunken ist.

Das aufgehellte, feinteilige Pulver hat ein Schüttgewicht von 365 g/l.

Beispiele 5–6

Polyadditionsreaktionen mit geringen Zusätzen inerter Lösungsmittel

Beispiel 5

100 Gew.-Tle. TDI-Rückstand III und eine Lösung von
10 Gew.-Tln. Aceton und
12 Gew.-Tln. Äthanolamin
werden innig vermischt und in einem Reaktionsgefäss 1 Std. bei 55 °C gehalten und schliesslich das Aceton abgedampft. Es bildet sich quantitativ ein NCO-freier, mit Hydroxyäthylharnstoff-Endgruppen modifizierter, sehr feinpulvriger TDI-Rückstand.

Patentbeispiel 6

100 Gew.-Tle. TDI-Rückstand III werden mit
6 Gew.-Tln. Harnstoff in 12 Gew.-Tln. Äthylacetate gemischt
und in einem Druckgefäss auf 140 °C gebracht. Nach 60 Min. lässt man das Lösungsmittel abdestillieren und isoliert den biuretisierten TDI-Rückstand.

Patentbeispiele 7–12

Polyadditionsreaktionen in grösseren Mengen inerter Lösungsmittel, in den der TDI-Rückstand lediglich suspendiert wird.

Patentbeispiel 7

100 Gew.-Tle. TDI-Rückstand IV,
165 Gew.-Tle. Aceton und
11,9 Gew.-Tle. N-Methyldiäthanolamin
werden in einer Rührapparatur so lange unter Rückfluss gekocht, bis keine freien Isocyanatgruppen mehr nachzuweisen sind.

Der mit eingebauten tertiären Stickstoffgruppen modifizierte TDI-Rückstand wird durch Abnutschen und Trocknen vom organischen Suspensionsmittel als feinteiliges Pulver isoliert.

Patentbeispiel 7a

In acetonischer Suspension erfolgt direkt im Anschluss an die Polyadditionsreaktion nach Beispiel 7 eine Methylierung mit 5 Äquivalent-Proz. Unterschuss an Dimethylsulfat bei Siedetemperatur. Der quartäre Stickstoffgruppen enthaltende, wie oben isolierte, extrem feinteilige TDI-Rückstand ist ein in Wasser unlöslicher, kationischer Polyelektrolyt, der im Gegensatz zu dem stark hydrophoben Ausgangsprodukt mit Wasser leicht benetzt und deshalb in Wasser ohne Überstand suspendiert werden kann.

Variationen analog Patentbeispiel 7a

Anstelle von Dimethylsulfat kann 1,2-Dichlorpropan, 1,4-Dichlorbuten, eine Mineralsäure oder Phosphorsäure zum Quarternieren verwendet werden, wobei der Quarternierungsgrad allerdings nicht ganz so hoch ist.

Patentbeispiel 8

100 Gew.-Tle. TDI-Rückstand IV mit einer Teilchengrösse $< 10\ \mu m$
150 Gew.-Tle. Toluol und
11 Gew.-Tle. Allylalkohol
werden analog Beispiel 7 bei der Siedetemperatur des Suspensionsmittels so lange unter Rühren erhitzt, bis der ungesättigte Alkohol an die freien Isocyanatgruppen addiert ist, was ca. 3-4 Stunden in Anspruch nimmt.

Nach dem Abkühlen der NCO-freien Suspension kann der modifizierte, sehr feinteilige TDI-Rückstand gegebenenfalls abgenutscht und getrocknet werden oder, siehe Beispiel 16, in einem weiteren Reaktionsschritt ohne Isolierung eine Copolymerisation angeschlossen werden.

Beispiel 9

100 Gew.-Tle. TDI-Rückstand IV mit einer Teilchengrösse $< 10\ \mu m$, werden in
158 Gew.-Tln. Aceton suspendiert und bei ca. 50 °C
22 Gew.-Tle. eines Diaminsulfonats der Formel 1 $H_2N\text{-}CH_2\text{-}CH_2\text{-}NH\text{-}CH_2\text{-}CH_2\text{-}SO_3Na$, das in
28 Gew.-Tln. Wasser gelöst ist, langsam zugefügt.

Man lässt noch ca. 1 Stde. unter Rückfluss sieden, bis keine freien NCO-Gruppen mehr nachzuweisen sind.

Der mit eingebauten Sulfonatgruppen modifizierte, anionische TDI-Rückstand eignet sich als Dispergierhilfe bei der Herstellung von wässrigen Polyurethan-Dispersionen.

Patentbeispiel 10

100 Gew.-Tle. TDI-Rückstand IV (Teilchengrösse $< 10\ \mu m$) und
100 Gew.-Tle. Azulminsäure, Teilchengrösse $< 10\ \mu m$, nach Th. Völker, Ang. Chem. 72 (1960) aus Blausäure gewonnen, werden in
300 Gew.-Tle. Aceton suspendiert und ca. 3 Stdn. bei Siedehitze gehalten, bis die Isocyanatgruppen mit den Aminogruppen der polymeren Blausäure vollständig reagiert haben.

Das NCO-freie, isolierte, sehr feinpulvrige Polyaddukt hat einen Gehalt an organischem Stickstoff von 32 Gew.-Proz.

Patentbeispiel 11

100 Gew.-Tle. TDI-Rückstand VII
200 Gew.-Tle. Toluol und
90 Gew.-Tle. Diepoxid der Formel

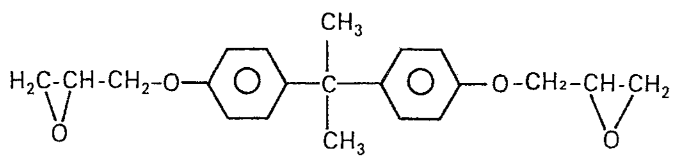

werden in einer Rührapparatur etwa 2,5 Stdn. bei ca. 110 °C gehalten, bis die Isocyanatgruppen quantitativ reagiert haben. Nach dem Abkühlen wird das feinpulverige Polyadditionsprodukt durch Filtration und Trocknung unter reduziertem Druck isoliert.

Patentbeispiel 12 (Verwendung als Füllstoff)

100 Gew.-Tle. TDI-Rückstand VII und
150 Gew.-Tle. Diepoxid wie in Beispiel 11, das mit 50 Gew.-Tle. Aceton
verdünnt wurde, werden bei Raumtemperatur innig vermischt und das Verdünnungsmittel unter Vakuum bei unter 50 °C abgezogen.

Die verbleibende Mischung wird in einer Stahlform 15 Min. bei ca. 150 °C und 20 bar ausgeheizt. Der Oxazolidonringe enthaltende Pressling wird nach dem Abkühlen entformt.

Isocyanatabspalter-Additionsreaktion in acetonischer Suspension

Patentbeispiel 13

100 Gew.-Tle. TDI-Rückstand IV mit einer Teilchengrösse $< 10\ \mu m$, in
150 Gew.-Tln. Aceton suspendiert, werden in einer Rührapparatur mit
25 Gew.-Tln. Natriumbisulfit, in
37 Gew.-Tln. Wasser gelöst, versetzt
und ca. 3 Stdn. bis zum Sieden erhitzt.

Aus der NCO-freien Suspension wird nach Entfernung des Suspensionsmittels ein modifizierter, beliebig lagerstabiler TDI-Rückstand erhalten, aus dem bei Temperaturen über 120 °C das Bisulfit unter Rückgewinnung freier Isocyanatgruppen wieder abgespalten werden kann.

Patentbeispiele 14 + 15

Katalytisch initiierte Reaktionen von TDI-Rückständen

Patentbeispiel 14

100 Gew.-Tle. TDI-Rückstand V (R 80) mit einer Teilchengrösse $< 300\ \mu m$ werden in
150 Gew.-Tln. wasserfreiem Toluol suspendiert und
1 Gew.-Tln. Phospholinoxid zugefügt.
Innerhalb von ca. 3-4 Stdn. sinkt bei Rückflusstemperatur unter $CO_2$-Abspaltung der Gehalt an freien NCO-Gruppen auf Null.

Der isolierte feinteilige TDI-Rückstand hat einen Gehalt an Carbodimidgruppen von ca. 20 Gew.-Prozent.

Patentbeispiel 15

Man verfährt wie in Beispiel 14 beschrieben, verwendet aber anstelle des Phospholinoxids insgesamt 3 Gew.-Tle. Tributylphosphin durch dreimalige portionsweise Zugabe in Abständen von jeweils 1 Stde.

Der Uretdiongruppen-modifizierte TDI-Rückstand setzt bei Temperaturen über 180 °C Isocyanatgruppen frei, in Anwesenheit von Aminogruppen bereits bei über 100 °C.

Patentbeispiele 16 + 17
Polymerisationsreaktionen mit TDI-Rückständen

Beispiel 16
In die nach Beispiel 8 gewonnene, NCO-freie Suspension des Allylurethan-Endgruppen enthaltenden TDI-Rückstandes fügt man bei 60–90 °C abwechselnd portionsweise insgesamt 4 Gew.-Tle. Azodiisobuttersäuredinitril und 45 Gew.-Tle. monomeres Acrylnitril zu und steigert die Temperatur mit fortschreitender Polymerisation allmählich bis ca. 110 °C. Die monomerenfreie Suspension wird nach dem Abkühlen abgenutscht, der Nutschkuchen mit wenig Aceton gewaschen und getrocknet.

Das stark aufgehellte, feinteilige Reaktionsprodukt hat ein Schüttgewicht von 450 g/l und eignet sich besonders als gut homogenisierbarer, organischer Füllstoff.

Patentbeispiel 17
100 Gew.-Tle. TDI-Rückstand IV,
Teilchengrösse < 10 µm, werden in
370 Gew.-Tln. Toluol suspendiert und
40 Gew.-Tle. eines ungesättigten Polyesters mit 1,4 Gew.-Proz. Hydroxylendgruppen (Säurezahl 1,4) aus Adipinsäure, Fumarsäure und 1,4-Butandiol (Mol-Verh. 13:13:29)
79 Gew.-Tle. Acrylnitril,
30 Gew.-Tle. Styrol und insgesamt
3 Gew.-Tle. Azodiisobuttersäuredinitril zugefügt.

Zunächst werden die Hydroxylgruppen des Polyesters mit den freien Isocyanatgruppen des TDI-Rückstandes bei 110 °C polyaddiert und direkt im Anschluss, wenn keine freien NCO-Gruppen mehr nachgewiesen werden können, analog Beispiel 16 polymerisiert. Das lösungsmittelfreie, feinteilige Reaktionsprodukt lässt sich zu einem beliebigen Zeitpunkt sedimentationsstabil in Hydroxylgruppen enthaltende Polyäther oder Polyester einrühren und als aktiver organischer Füllstoff verwenden.

Patentbeispiele 18 und 19
Isocyanatadditionsreaktionen während des Nassmahlens

Patentbeispiel 18
Eine TDI-Rückstandsschlacke (65 D) wird sofort nach der Vorzerkleinerung auf einer Hammermühle (mittlere Teilchengrösse ca. 0,8 mm; NCO-Gehalt: 13,4 Gew.-Proz.) 30%ig in Wasser bei Raumtemperatur suspendiert und mit 15 Gew.-Tln. einer 25%igen, wässrigen Ammoniaklösung pro 100 Gew.-Tle. TDI-Rückstand-Feststoff versetzt.

Die Nassfeinzerkleinerung des TDI-Rückstandes erfolgt mit Hilfe einer Trigonalzahnringmühle auf eine Teilchengrösse < 160 µm in dieser verdünnten, ammoniakalisch-wässrigen Phase, wobei die Temperatur während des Mahlprozesses auf ca. 70 °C steigt.

Nach mindestens 3 Stdn. oder zu einem späteren Zeitpunkt wird die wässrige Suspension auf einer Drucknutsche abgedrückt und der gewaschene ca. 65%ige, feinkörnige Nutschkuchen isoliert.

Der freie Harnstoffendgruppen enthaltende T 65-Rückstand hat einen NCO-Gehalt unter 0,2 Gew.-Proz. und ist besonders geeignet für Kondensationsreaktionen mit Carbonylverbindungen oder Mischkondensationen mit Carbonylverbindungen und Amino- oder Phenoplastbildnern.

Patentbeispiel 19
100 Gew.-Tle. vorzerkleinerte TDI-Schlacke, mittlere Teilchengrösse 800 µm, von Patentbeispiel 18 werden mit
20 Gew.-Tln. einer 30%igen wässrigen Äthylendiaminlösung in
Wasser mit einem Feststoffgehalt von ca. 30 Gew.-Proz. suspendiert und wie in Beispiel 18 kontinuierlich durch eine Trigonalzahnringmühle gepumpt. Der zusätzliche Polyharnstoffgruppen enthaltende NCO-freie TDI-Rückstand wird durch Abnutschen und Trocknen bei 100 °C im Umluftschrank vom Wasser befreit.

Das Schüttgewicht beträgt 535 g/l

Patentbeispiel 20
100 Gew.-Tle. der in einer Hammermühle auf 1 mm Unterkorn vorzerkleinerten TDI-Schlacke analog Rückstand I mit noch 9,8 Gew.-Proz. an freien Isocyanatgruppen werden 35%ig in Wasser mit
10 Gew.-Tln. 25%iger, wässriger Ammoniaklösung suspendiert
und mit Hilfe einer Kolloidzahnringmühle auf unter 160 µm Korngrösse analog Patentbeispiel 19 zerkleinert und anschliessend in einem Rührkessel mit 12 Gew.-Proz. Formalinlösung (mit 30% $CH_2O$) phosphorsauer bei $p_H3$ bei 60–80 °C während 3 Stdn. kondensiert.

Nach dem Abkühlen wird auf einer Drucknutsche abgesaugt, einmal mit 0,5%igem Ammoniakwasser und zweimal mit ionenfreiem Wasser gewaschen und jeweils abgepresst.

Der Polymethylenharnstoffgruppen-modifizierte, NCO-freie TDI-Rückstand kann zur Thermostabilisierung von Kunststoffen verwendet werden.

Patentbeispiele 21 bis 26
Zerkleinerung und Umsetzungen in einem Mischer-Reaktor

Allgemeine Arbeitsvorschrift
In einem liegenden zylindrischen Behälter mit pflugscharähnlichen Mischelementen mit einem Mehrstufen-Messerkopf wird der auf weniger als

3 mm vorzerkleinerte TDI-Rückstand dreidimensional in einem schwachen Stickstoffstrom in eine intensive Bewegung gebracht und auf 90–100 °C erhitzt. Eine weitere Zerkleinerung erfolgt sowohl mit Hilfe des schnell rotierenden Messerkopfes als auch durch gegenseitiges Aneinanderprallen der sehr harten Rückstandspartikel oder durch den Aufprall an die Trommelwand. Während dieser Feinzerkleinerung werden die in der Tabelle angegebenen Mengen der verwendeten Glykole unter Druck so eingedüst, dass deren Zerstäubung im schrägen Winkel zu den Messern in das wirbelnde Mischgut erfolgt. Bei einer Reaktionstemperatur von ca. 100 °C reagiert der grössere Teil des im TDI-Rückstandspulver gegebenenfalls noch vorhandenen Restisocyanatgehalts je nach Teilchengrösse innerhalb von 30 Min. bis 2 Stunden, wobei eine entsprechende Äquivalenzmenge des eingesetzten Glykols unter Ausbildung von Urethangruppen und gegebenenfalls von Hydroxylendgruppen enthaltenden Polyurethanverbindungen reagiert. Überschüssiges Glykol wird unter den beschriebenen Bedingungen extrem grossflächig und gleichmässig in sehr dünnen Schichten auf der Oberfläche des TDI-Rückstandspulvers verteilt. Falls noch eine geringe Menge Restfeuchte bei Verwendung von mit Wasser denaturierten TDI-Rückständen vorhanden ist, können die stark hydrophilen Glykole partiell in die oft fein porösen Teilchen eindringen. Auf diese Weise gelingt es, gut rieselfähige, sehr feinteilige und nicht staubende Pulver zu erhalten, die im Falle sehr feiner Partikel bis zu 25 oder gar 35 Gewichtsprozent an bei Raumtemperatur flüssigen Glykolen aufnehmen und trotzdem ein trockenes Aussehen besitzen.

Rezepturen und Pressbedingungen für Patentbeispiele 21–25

Tabelle 2

| Patent-beispiel | TDI-Rückstand (Teile) | DG (Teile) | EG (Teile) | EGR (Teile) | PPG (Teile) | Pressbedingungen | | |
|---|---|---|---|---|---|---|---|---|
| | | | | | | °C | Kp/m² | min/mm |
| 21 | 85 II | 10 | 5 | - | - | 220 | 40 | 0,3 |
| 22 | 88 II | - | - | 12 | - | 185 | 50 | 0,5 |
| 23 | 83 III | 17 | - | - | - | 180 | 50 | 0,3 |
| 24 | 80 VII | 20 | - | - | - | 170 | 30 | 0,2 |
| 25 | 85 VII | 10 | - | - | 5 | 170 | 10 | 0,2 |

DG = Diäthylenglykol
EG = Äthylenglykol
EGR = EG-Rückstand (Sumpfrückstand aus Mono- bis Pentaäthylenglykol)
PPF=Polypropylenglykol(Molekulargewicht600)

Rezeptur Patentbeispiel 26:

Eine grobkörnige Probe aus der Grobzerkleinerung von TDI-Rückstand II mit einem Grobkornanteil von 45% in der Teilchengrösse zwischen 0,5-3 mm wird in einem Gew.-Verhältnis 90:10 mit Diäthylenglykol im Misch- und Zerkleinerungs-Reaktor zur Reaktion gebracht und nach dem Abkühlen entweder innerhalb von 1–2 Stunden im Mischer weiter zerkleinert oder mit Hilfe einer Luftstrommühle auf eine Teilchengrösse unter 0,5–1 mm gemahlen.

Eine nachträgliche Zerkleinerung ist bei den mit Glykolen modifizierten TDI-Rückständen nach den Patentbeispielen 21–25 nicht erforderlich, da unter den angegebenen Versuchsbedingungen keine Agglomeration der feinteilig eingesetzten TDI-Rückstände erfolgt.

Verarbeitung zu Pressplatten:

Die nach den Patentbeispielen 21–26 erhaltenen mit niedermolekularen Glykolen modifizierten TDI-Rückstandspulver sind unter einem spezifischen Druck von 10–50 bar und Temperaturen von 170–220 °C zu Platten verpressbar, die Kugeldruckhärten von 9–16 kp/mm² und eine hohe Schlagzähigkeit aufweisen. Besonders hervorzuheben ist die brandhemmende Wirkung. 2–5 mm dicke Platten können bis zur Rotglut mit Hilfe einer Sauerstoffgebläseflamme unter oberflächlicher, schäumender Volumenvergrösserung erhitzt werden. Nach Beendigung der Beflammung tritt sofort Selbstverlöschung ein.

**Patentansprüche**

1. Verfahren zur Aufarbeitung von Toluylendiisocyanat-Destillationsrückständen unter Vermahlung der Rückstandsschlacke und gegebenenfalls Umsetzung mit reaktiven Verbindungen unter Gewinnung wiederverwertbarer Ausgangsprodukte für die Herstellung von Kunststoffen dadurch gekennzeichnet, dass man einen im wesentlichen monomerenfreien, vernetzten, in inerten organischen Lösungsmitteln unlöslichen, nicht unzersetzt schmelzbaren Destillationsrückstand, wie er bei der destillativen Entfernung von monomeren Toluylendiisocyanaten aus dem rohen Phosgenierungsprodukt von Toluylendiaminen, gegebenenfalls nach dem Einrühren in Wasser, als Schlacke mit einem NCO-Gehalt $<15$ Gew.-% anfällt, zu einer mittleren Teilchengrösse von weniger als 800 µm vermahlt und gegebenenfalls gleichzeitig und/oder anschliessend durch Reaktion mit gegenüber den funktionellen Gruppen des Destillationsrückstands reaktiven Verbindungen chemisch modifiziert.

2. Verfahren nach Anspruch 1, dadurch gekennzeichnet, dass man den Destillationsrückstand nach dem Einrühren in Wasser als Schlakke mit einem NCO-Gehalt von 1 bis 10 Gew.-% zu einer Teilchengrösse von <800 µm vermahlt und gegebenenfalls gleichzeitig und/oder anschliessend durch Reaktion mit gegenüber den funktionellen Gruppen des Destillationsrückstands reaktiven Verbindungen chemisch modifiziert.

3. Verfahren nach Ansprüchen 1 und 2, dadurch gekennzeichnet, dass man die Schlacke vermahlt und gleichzeitig und/oder anschliessend durch Reaktion mit gegenüber den funktionellen Gruppen des Destillationsrückstandes reaktiven Verbindungen chemisch modifiziert.

4. Verfahren nach Ansprüchen 1 bis 3, dadurch gekennzeichnet, dass man die Schlacke zu einer mittleren Teilchengrösse von weniger als 100 µm vermahlt.

5. Verfahren nach Ansprüchen 1 bis 4, dadurch gekennzeichnet, dass man die Schlacke nass vermahlt.

6. Verfahren nach Ansprüchen 1 bis 5, dadurch gekennzeichnet, dass man die Schlacke während des Mahlvorgangs und/oder anschliessend durch Reaktion mit Wasser und/oder Ammoniak und/oder Hydroxylgruppen und/oder Carboxylgruppen aufweisenden Verbindungen und/oder aminofunktionellen Verbindungen oder mit Carbonylverbindungen aus der Gasphase oder aus flüssiger Phase modifiziert.

7. Verfahren nach Anspruch 6, dadurch gekennzeichnet, dass durch die Modifizierungsreaktion ungesättigte Gruppen in die pulverisierte Rückstandsschlacke eingeführt werden und die mit ungesättigten Gruppen modifizierte, pulverisierte Rückstandsschlacke gegebenenfalls in einem weiteren Reaktionsschritt durch radikalisch initiierte Polymerisation von olefinische Doppelbindungen aufweisenden Verbindungen umhüllt wird.

8. Verfahren nach Ansprüchen 1 bis 5, dadurch gekennzeichnet, dass man die in der feingemahlenen Schlacke noch vorhandenen freien Isocyanatgruppen einer katalytisch initiierten Dimerisierungs- oder Trimerisierungsreaktion unterwirft.

9. Verwendung von nach Ansprüchen 3 bis 8 aufgearbeiteten, pulverförmigen Toluylendiisocyanat- Destillationsrückständen als Press- bzw. Sintermassen oder als reaktive Füllstoffe bei der Herstellung von homogenen oder zelligen Kunststoffen durch Polyadditions-, Polykondensations-, und/oder Polymerisationsreaktionen.

10. Verfahren zur Herstellung von Platten oder Formteilen durch Heissverpressen lignocellulose-haltiger Rohstoffe mit einem Bindemittel, dadurch gekennzeichnet, dass man als Bindemittel mehr als 2 Gew.-%, (bezogen auf Gesamtgewicht des Formkörpers) der gemäss Ansprüche 1 bis 8 aufgearbeiteten Toluylendiisocyanat- Destillationsrückstände, gegebenenfalls zusammen mit an sich bekannten Formaldehydharzen, verwendet.

**Revendications**

1. Procédé de traitement de résidus de distillation de diisocyanatotoluène avec broyage des scories résiduaires et, le cas échéant, réaction avec des composés réactifs et obtention de matières premières réexploitables pour la production de matières plastiques, caractérisé en ce qu'on broie en particules d'un diamètre moyen de moins de 800 µm un résidu de distillation principalement dépourvu de monomères, réticulé, insoluble dans des solvants organiques inertes, ne fondant pas sans se décomposer, tel qu'on en obtient dans l'élimination par distillation de diisocyanatotoluènes monomères du produit brut de phosgénation de diaminotoluènes, éventuellement après délayage dans l'eau, comme scories ayant une teneur en NCO de moins de 15% en poids, et le cas échéant, on le modifie chimiquement en même temps et/ou ensuite par réaction avec des composés réactifs envers les groupes fonctionnels du résidu de distillation.

2. Procédé suivant la revendication 1, caractérisé en ce qu'on broie le résidu de distillation après délayage dans l'eau, en tant que scories ayant une teneur en NCO de 1 à 10% en poids, en particules de diamètre inférieur à 800 µm et, le cas échéant, on le modifie chimiquement en même temps et/ou ensuite par réaction avec des composés réactifs envers les groupes fonctionnels du résidu de distillation.

3. Procédé suivant la revendications 1 et 2, caractérisé en ce qu'on broie les scories et les modifie chimiquement en même temps et/ou ensuite par réaction avec des composés réactifs envers les groupes fonctionnels du résidue de distillation.

4. Procédé suivant la revendication 1 à 3, caractérisé en ce qu'on broie les scories en particules d'un diamètre moyen de moins de 100 µm.

5. Procédé suivant la revendications 1 à 4, caractérisé en ce que les scories sont broyées par voie humide.

6. Procédé suivant la revendications 1 à 5, caractérisé en ce que les scories sont modifiées pendant le processus de broyage et/ou ensuite, par réaction aved l'eau et/ou avec l'ammoniac et/ou avec des composés porteurs de groupes hydroxyle et/our carboxyle et/ou des composés à fonctionnalité amino ou avec des composés carbonyliques, en phase gazeuse ou en phase liquide.

7. Procédé suivant la revendication 6, caractérisé en ce que sous l'effet de la réaction de modification, des groupes non saturés sont incorporés aux scories résiduaires pulvérisées et les scories résiduaires pulvérisées modifiées avec des groupes non saturés sont, le cas échéant, enveloppées, dans une autre phase réactionnelle, par polymérisation, déclenchée par des radicaux, de composés porteurs de doubles liaisons oléfiniques.

8. Procédé suivant la revendications 1 à 5, caractérisé en ce qu'on expose les groupes isocyanate libres encore présents dans les scories finement broyées à une réaction de dimérisation ou de trimérisation déclenchée par voie catalytique.

9. Utilisation de résidus de distillation de diisocyanatotoluène en poudre, traités selon les revendications 3 à 8, comme matières à mouler ou à fritter ou comme charges réactives dans la production de matières plastiques homogènes ou cellulaires par des réactions de polyaddition, de polycondensation et/ou de polymérisation.

10. Procédé de production de plaques ou pièces moulées par compression à chaud de matières premières contenant de la lignocellulose avec un liant, caractérisé en ce qu'on utilise comme liant plus de 2% en poids, par rapport au poids total de la pièce moulée, des résidus de distillation de diisocyanatotoluène traités conformément aux revendications 1 à 8, le cas échéant conjointement avec des résines de formaldéhyde connues.

## Claims

1. A process for working up tolylene diisocyanate distillation residues by grinding the residue slag and optionally reacting it with reactive compounds to obtain reuseable starting products for the production of plastics, characterised in that a substantially monomer-free, crosslinked distillation residue which is insoluble in inert organic solvents and which cannot be melted without decomposing, of the type accumulating as slag with an NCO-content of less than 15% by weight in the removal of monomeric tolylene diisocyanates by distillation from the crude phosgenation product of tolylene diamines, optionally after stirring into water, is ground to a mean particle size of less than 800 µm and is optionally chemically modified at the same time and/or afterwards by reaction with compounds reactive to the functional groups of the distillation residue.

2. A process as claimed in Claim 1, characterised in that, after stirring into water, the distillation residue accumulating as slag with an NCO-content of from 1 to 10% by weight is ground to a particle size of less than 800 µm and is optionally chemically modified at the same time and/or afterwards by reaction with compounds reactive to the functional groups of the distillation residue.

3. A process as claimed in Claims 1 to 2, characterised in that the slag is ground and chemically modified at the same time and/or afterwards by reaction with compounds reactive to the functional groups of the distillation residue.

4. A process as claimed in Claims 1 to 3, characterised in that the slag is ground to a mean particle size of less than 100 µm.

5. A process as claimed in Claims 1 to 4, characterised in that the slag is wet-ground.

6. A process as claimed in Claims 1 to 5, characterised in that the slag is modified during grinding and/or after grinding by reaction wioth water and/or ammonia and/or compounds containing hydroxyl groups and/or carboxyl groups and/or with aminofunctional compounds or with carbonyl compounds from the gas phase or from the liquid phase.

7. A process as claimed in Claim 6, characterised in that unsaturated groups are introduced into the powdered residue slag by the modification reaction and the powdered residue slag modified with unsaturated groups is optionally coated in another reaction step by the radically initiated polymerisation of compounds containing olefinic double bonds.

8. A process as claimed in Claims 1 to 5, characterised in that the free isocyanate groups still present in the finely ground slag are subjected to a catalytically initiated dimerisation or trimerisation reaction.

9. The use of powder-form tolylene diisocyanate distillation residue worked up in accordance with Claims 3 to 8 as moulding or sintering compositions or as reactive fillers in the production of non-cellular or cellular plastics by polyaddition, polycondensation and/or polymerisation reactions.

10. A process for the production of boards or mouldings by the hot-pressing of starting materials containing ligno-cellulose with a binder, characterised in that more than 2% by weight, based on the total weight of the moulding, of the tolylene diisocyanate distillation residues worked up in accordance with Claims 1 to 8, optionally together with formaldehyde resins known per se, are used as binder.